**Europäisches Patentamt**

**European Patent Office**

**Office européen des brevets**

(19)

(11) Veröffentlichungsnummer: **0 204 331**
A2

(12)

# EUROPÄISCHE PATENTANMELDUNG

(21) Anmeldenummer: **86107607.3**

(22) Anmeldetag: **04.06.86**

(51) Int. Cl.⁴: **G 01 F 23/04**
**G 01 F 23/24**

(30) Priorität: 05.06.85 DE 3520125
24.05.86 DE 3617536

(43) Veröffentlichungstag der Anmeldung:
10.12.86 Patentblatt 86/50

(84) Benannte Vertragsstaaten:
DE FR GB IT NL SE

(71) Anmelder: VDO Adolf Schindling AG
Gräfstrasse 103
D-6000 Frankfurt/Main(DE)

(72) Erfinder: Benda, Franz
Massbornstrasse 23
D-6000 Frankfurt/Main(DE)

(72) Erfinder: Reiferscheid, Norbert
Thüringer Strasse 2
D-6277 Camberg(DE)

(74) Vertreter: Klein, Thomas, Dipl.-Ing. (FH)
Sodener Strasse 9 Postfach 6140
D-6231 Schwalbach a. Ts.(DE)

(54) Einrichtung zur elektrischen Ölfüllstandsüberwachung, insbesondere in Kraftfahrzeug-Verbrennungsmotoren.

(57) Bei einer Einrichtung zur elektrischen Ölfüllstandsüberwachung insbesondere in Kraftfahrzeug-Verbrennungsmotoren ist ein temperaturabhängiges Widerstandselement
(1) in einem Hohlraum (12) eines Ölmeßstabs (11) untergebracht. Das Widerstandselement weist Zuleitungen (3, 4) zum
Anschluß an eine Auswertungsschaltungsanordnung mit
Stromquelle auf. Zur Verbesserung des Meßeffekts ist das
Widerstandselement (1) an einem in der Hohlraum (12) des
Ölpeilstabs (11) passenden Plättchen (2) aus einem Material
hoher Wärmeleitfähigkeit unter Bildung einer gut wärmeleitenden Verbindung angebracht. Die Zuleitungen (3, 4) bestehen aus einem elektrischen Leiter schlechter Wärmeleitfähigkeit.

Fig. 1

VDO Adolf Schindling AG    - 1 -    6000 Frankfurt/Main
Gräfstr. 103
G-R Kl/MB / 1832
21. Mai 1986

Einrichtung zur elektrischen Ölfüllstandsüberwachung
insbesondere in Kraftfahrzeug-Verbrennungsmotoren

Die Erfindung betrifft eine Einrichtung zur elektrischen Ölfüllstandsüberwachung insbesondere in Kraftfahrzeug-Verbrennungsmotoren nach dem Oberbegriff des Anspruchs 1.

Bei derartigen bekannten Einrichtungen wird als temperaturabhängiges Widerstandselement z. B. ein Widerstand mit positivem Temperaturkoeffizienten (PTC) benutzt, der in Perlenform in Glas gekapselt sein kann. Über Zuleitungen kann das
temperaturabhängige Widerstandselement an eine Auswertungsschaltungsanordnung mit Stromquelle angeschlossen werden,
mit der die an dem Widerstandselement herrschende Temperatur
in ein elektrisches Signal umgewandelt werden kann. Dabei
wird ausgenutzt, daß das Widerstandselement, je nachdem,
wie weit es in ein besser wärmeleitendes Medium - Öl - als
Luft eintaucht, mehr oder weniger Wärme an seine Umgebung
abgibt, die durch den durch das Widerstandselement fließenden Strom erzeugt wird. Wenn beispielsweise das Widerstandselement in Öl eintaucht, erfolgt eine weitgehende Wärmeabgabe und die Temperatur des Widerstandselements ist entsprechend niedrig. Dem entspricht ein verhältnismäßig
niedriger Widerstand und kleiner Spannungsabfall an dem

Widerstandselement. Liegt hingegen das Widerstandselement in Luft, so erfolgt nur eine geringe Wärmeabgabe, und das Widerstandselement wird auf eine vergleichsweise hohe Temperatur aufgeheizt. Wegen des dann höheren Widerstandswerts des Widerstandselements fällt an diesem eine relativ große Spannung ab, die ausgewertet werden kann. Die Auswertung des Widerstandswerts des temperaturabhängigen Widerstandselements kann mit einer Brückenschaltung mit nachgeschalteten Verstärkerstufen erfolgen. - Das temperaturabhängige Widerstandselement kann zur elektrischen Ölfüllstandsüberwachung in einem hohl ausgebildeten Ölmeßstab untergebracht sien, der gegebenenfalls noch ein weiteres temperaturabhängiges Widerstandselement, insbesondere mit negativem Temperaturkoeffizienten, zur Nulltemperaturüberwachung aufnimmt.

Zur beschriebenen Funktion des temperaturabhängigen Widerstandselements bei der Füllstandsüberwachung kommt es für einen großen Meßeffekt bzw. zum Erzielen deutlich unterschiedlich elektrischer Signale für das in das Öl eingetauchte oder aber ausgetauchte Widerstandselement darauf an, daß dessen Wärmeabgabe an die Umgebung im ausgetauchten Zustand klein ist, jedoch in eingetauchtem Zustand relativ groß ist.
Der vorliegenden Erfindung liegt daher die Aufgabe zugrunde, den Meßeffekt zum Erzielen deutlich unterschiedlicher elektrischer Signale im eingetauchten bzw. ausgetauchten Zustand des temperaturabhängigen Widerstandselements in wenig aufwendiger Weise zu verbessern.

Diese Aufgabe wird durch die Anordnung des Widerstandselements mit den Merkmalen des kennzeichnenden Teils des Anspruchs 1 gelöst.

Dadurch, daß die Zuleitungen aus einem elektrischen Leiter schlechter Wärmeleitfähigkeit bestehen, wird erreicht, daß die Wärme des Widerstandselements gut an das umgebende Öl im eingetauchten Zustand abgegeben wird und im ausgetauchten Zustand des Widerstandselements über die Zuleitungen nur wenig Wärme abgeleitet wird. Das Widerstandselement kann also im ausgetauchten Zustand mit verhältnismäßig geringer elektrischer Energie auf eine recht hohe Temperatur aufgeheizt werden und hat damit einen relativ hohen Widerstand, der beim Eintauchen des Widerstandselements in Öl deutlich absinkt.

Dabei ist vorteilhaft, daß zum Erreichen des Meßeffekts eine relativ geringe elektrische Energie zur Beheizung des Widerstandselements benötigt wird. Es können temperaturabhängige Widerstandselemente geringer Leistungsaufnahme verwendet werden, die dementsprechend klein sind und deren Einbau in den begrenzten Hohlraum eines Ölmeßstabs somit unproblematisch ist. - Infolge des großen Meßeffekts sind die Anforderungen an den Verstärker, der die unterschiedlichen Spannunsgabfälle an dem elektrischen Widerstandselement auswertet, gering. Die gesamte Einrichtung zur elektrischen Ölfüllstandsüberwachung mit der nachgeschalteten Auswertungsschaltungsanordnung mit Stromquelle läßt sich somit kostengünstig herstellen. Damit werden weitreichende Anwendungsmöglichkeiten auch bei weniger aufwendigen Fahrzeugen erschlossen, deren Betriebssicherheit somit erhöht wird.

Wenn das Widerstandselement an einem in den Hohlraum des Ölpeilstabs passenden Plättchen aus einem Material hoher Wärmeleitfähigkeit unter Bildung einer gut wärmeleitenden Verbindung angebracht ist, wird ebenfalls erreicht, daß die Wärme des Widerstandselements gut an das umgebende Öl im eingetauchten

- 4 -

0204331

Zustand abgegeben wird. In einer zweckmäßigen Ausführungsform besteht das Plättchen, an dem das temperaturabhängige Widerstandselement angebracht ist, aus Metall hoher Wärmeleitfähigkeit, insbesondere Bronze.

Über das Metall wird ein großer Teil der mit dem temperaturabhängigen Widerstandselement erzeugten Wärme an das umgebende Öl in eingetauchtem Zustand des Widerstandselements abgeleitet. Es genügt dabei eine so große wirksame Oberfläche des aus dem Metall bestehenden Plättchens, die sich noch leicht in dem Hohlraum des Ölmeßstabs unterbringen läßt. Bei dem Einbau wird darauf geachtet, daß das metallische Plättchen hoher Wärmeleitfähigkeit nicht unmittelbar mit dem Ölmeßstab in eine gut wärmeleitende Verbindung gelangt.

Besonders vorteilhaft ist die Ausbildung des Plättchens, an dem das Widerstandselement angebracht ist, aus Keramik, welches ebenfalls gut wärmeleitend ist. Das Keramikplättchen hat darüber hinaus den Vorteil, daß es elektrisch isolierend ist und sich als Substrat (Träger) für die Zuleitungen zu dem Widerstandselement eignet.

Zum Einbau des Plättchens in den Hohlraum eines Ölmeßstabs hat sich eine rechteckige Form des Plättchens als besonders geeignet erwiesen. Damit kann das Plättchen trotz der beschränkten Einbaubreite eine genügende Oberfläche zur Wärmeabgabe an das Öl im eingetauchten Zustand aufweisen.

Als besonders vorteilhafte Dimensionierung des rechteckförmigen Plättchens hat sich eine Breite von ca. 3 mm und eine Höhe von etwa 9 mm herausgestellt. Dabei ist das Plättchen, wenn es aus Metall gefertigt ist, vorteilhaft 0,1 mm dick; bei der Ausführung aus Keramik 0,3 mm. Es wird somit ein gutes Verhältnis zwischen der wärmeübertragenden Oberfläche des Plättchens und der Wärmekapazität des Plättchens erreicht.

Besonders vorteilhaft ist es, wenn das Widerstandselement durch die mit ihm verbundenen Zuleitungen im Hohlraum des Ölmeßstabs gehalten ist. Die dabei sehr geringe aufzuheizende Masse führt zu einer noch schnelleren Reaktion des temperaturabhängigen Widerstandselements. Vorzugsweise werden dabei die Zuleitungen mit einer gut wärmeleitenden Verbindung an dem Widerstandselement angebracht.

Die Zuleitungen werden vorteilhaft aus Konstanten oder Nickel gefertigt, welches den Meßeffekt praktisch nicht verfälscht.

Die Erfindung wird im folgenden anhand einer Zeichnung mit drei Figuren erläutert. Es zeigen:

Fig. 1    eine erste Ausführungsform des an dem Plättchen angebrachten Widerstandselements mit Zuleitungen in einer Seitenansicht,

Fig. 2    eine zweite Ausführungsform des Widerstandselements auf einem Plättchen, ebenfalls mit Zuleitungen, in einer Seitenansicht und

Fig. 3    einen Längsschnitt durch ein Ende eines Ölmeßstabs, in dem unter anderem ein temperaturabhängiges Widerstandselement mit Plättchen zur Ölfüllstandsüberwachung untergebracht ist.

Die Plättchen und die Widerstandselemente sind in der Zeichnung vergrößert dargestellt.

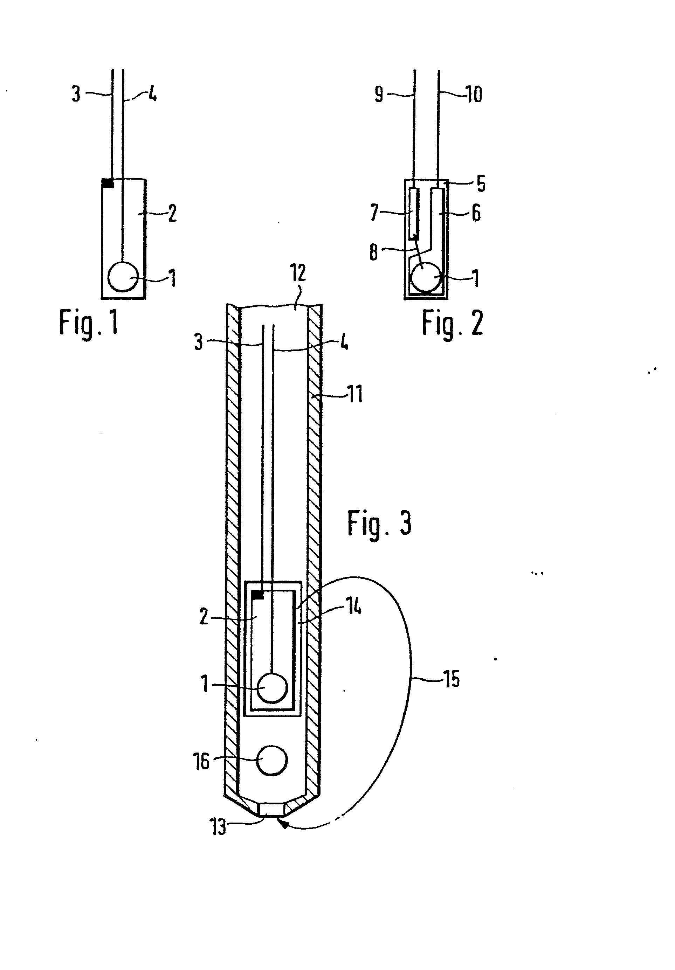

In der Zeichnung ist mit 1 ein elektrisches Widerstandselement mit positiven Temeraturkoeffizienten (PTC) bezeichnet, welches bei beiden Ausführungsformen nach den Fig. 1 und 2 eingesetzt wird.

In der ersten Ausführungsform nach Fig. 1 ist das Widerstandselement auf einem asu Bronze bestehenden Plättchen 2 wärmeleitend fest angebracht.

Zwei Zuleitungen 3, 4 zu dem Widerstandselement bestehen aus Konstantandraht. Die Zuleitung 3 ist an dem Bronzeplättchen kontaktiert, welches widerum eine elektrische Verbindung zu einem Anschlußpunkt des Widerstandselements 1 herstellt.

Die zweite Ausführungsform nach Fig. 2 unterscheidet sich von derjenigen nach Fig. 1 zunächst dadurch, daß das Plättchen 5 aus Keramik besteht. Das Keramikplättchen dient nicht nur zur festen und gut wärmeleitenden Anbringung des Widerstandselements 1, sondern auch als Substrat für zwei Leiterbahnen 6 und 7, die als Teil der Zuleitungen zu dem Widerstandselement dienen.

Während die Leiterbahn 6 auf der dem Betrachter zugewandten Seite des in Fig. 2 dargestellten Plättchens mit dem Widerstandselement 1 direkt kontaktiert ist, erfolgt die Kontaktierung der Leiterbahn 7 über eine elektrische Brücke 8. Mit den Leiterbahnen 6, 7 sind Konstantandrähte 9, 10 zur weiteren elektrischen Verbindung des Widerstandselements mit einer nicht dargesatellten Auswertungsschaltung kontaktiert.

Aus Fig. 3 geht hervor, wie ein unteres Ende eines Ölmeßstabs 11 mit einem Hohlraum 12 ausgeformt ist, welcher in eine untere Öffnung 13 übergeht. Außerdem ist der Ölmeßstab mit einem seitlichen Fenster 14 durchbrochen. Durch die untere Öffnung 13 und das Fenster 14 kann eine Ölzirkulation erfolgen, die mit der Linie 15 angedeutet ist.

In dem Hohlraum des Ölmeßstabs, und zwar im Bereich des Fensters 14 ist ein Widerstandselement 1 mit einem Plättchen (Träger) 2 aus Bronze bzw. 5 aus Keramik angeordnet, je nachdem ob die erste oder zweite Ausführungsform eingesetzt wird. Die Zuleitungen 3, 4 im Falle der zweiten Ausführungsform 9, 10 - sind aus dem Ölmeßstab zu einer nicht dargestellten Auswertungsschaltungsanordnung mit Stromquelle herausgeführt.

In dem Hohlraum des Ölmeßstabs ist noch ein weiteres temperaturabhängiges Widerstandselement 16 angeordnet, welches einen negativen Temperaturkoeffizienten (NTC) aufweisen kann und insbesondere zur Öltemperaturmessung eingesetzt wird. Die Anschlüsse des zweiten Widerstandselements 16 sind nicht dargestellt.

Wenn das Plättchen 2 mit dem Widerstandselement in umgebendes - in Fig. 3 nicht gezeigtes - Öl eintaucht, wird die in dem Widerstandselement erzeugte Wärme über die Plättchenoberfläche weitgehend an das Öl abgegeben und die Temperatur des Widerstandselements wird relativ niedrig gehalten. Liegt andererseits das Widerstandselement 1 mit dem Plättchen 2 in dem Hohlraum 12 frei in Luft, so wird nur wenig Wärme von dem Widerstandselement und dem Plättchen an die Umgebung abgegeben und das Widerstandselement wird auf eine relativ hohe Temperatur durch den durch die Zuleitungen 3, 4 fließenden Strom erwärmt. Dabei erfolgt allenfalls nur eine geringe Wärmeableitung über die Zuleitungen 3, 4 und praktisch keine Wärmeableitung über den Ölmeßstab 11. Mit der nicht dargestellten Auswertungsschaltunsanordnung, die an die Zuleitungen 3, 4 anzuschließen ist, kann daher ein stark unterschiedlicher Spannungsabfall an dem Widerstandselement festgestellt werden, je nachdem, ob das Widerstandselement mit dem Plättchen sich in eingetauchtem oder ausgetauchtem Zustand befindet.

VDO Adolf Schindling AG

Gräfstr. '03
6000 Frankfurt/Main
G-R Kl/MB / 1832
21. Mai 1986

**0204331**

### Patentansprüche

1. Einrichtung zur elektrischen Ölfüllstandsüberwachung insbesondere in Kraftfahrzeug-Verbrennungsmotoren, mit einem in einem Hohlraum eines Ölmeßstabs untergebrachten temperaturabhängigen Widerstandselement, welches Zuleitungen zum Anschluß an eine Auswertungsschaltungsanordnung mit Stromquelle aufweist, d a d u r c h   g e k e n n z e i c h n e t , daß die Zuleitungen (3, 4 bzw. 9, 10) zum Widerstandselement (1) aus einem elektrischen Leiter schlechter Wärmeleitfähigkeit bestehen.

2. Einrichtung nach Anspruch 1, dadurch gekennzeichnet, daß das Widerstandselement (1) an einem in den Hohlraum (12) des Ölmeßstabs (11) passenden Plättchen (2 bzw. 5) aus einem Material hoher Wärmeleitfähigkeit unter Bildung einer gut wärmeleitenden Verbindung angebracht ist.

3. Einrichtung nach Anspruch 2,
   . g e k e n n z e i c h n e t   d u r c h
   ein aus Metall hoher Wärmeleitfähigkeit, insbesondere Bronze, bestehendes Plättchen (2).

4. Einrichtung nach Anspruch 2,
   g e k e n n z e i c h n e t   d u r c h
   ein aus Keramik bestehendes Plättchen (5).

5. Einrichtung nach einem der Ansprüche 2 - 4,
   . d a d u r c h   g e k e n n z e i c h n e t ,
   daß das Plättchen (2 bzw. 5) rechteckförmig ausgebildet ist.

6. Einrichtung nach Anspruch 5,
d a d u r c h   g e k e n n z e i c h n e t ,
daß das rechteckförmige Plättchen (2 bzw. 5) etwa 3 mm breit
und 9 mm hoch ist.

7. Einrichtung nach Anspruch 4,
d a d u r c h   g e k e n n z e i c h n e t ,
daß das aus Keramik bestehende Plättchen (5) zugleich als
Substrat für Leiterbahnen (6, 7) dient.

8. Einrichtung nach Anspruch 1,
d a d u r c h   g e k e n n z e i c h n e t ,
daß das Widerstandselement durch die mit ihm verbundenen Zuleitungen im Hohlraum des Ölmeßstabs gehalten ist.

9. Einrichtung nach den Ansprüchen 1 - 5,
g e k e n n z e i c h n e t   d u r c h
Zuleitungen (3, 4 bzw. 9, 10) aus Konstantandraht bzw. Nickeldraht.

Fig. 1

Fig. 2

Fig. 3